# DEMANDE DE BREVET EUROPEEN

(11) **EP 0 838 675 A1**
(43) Date de publication de la demande: **29.04.1998**
(21) Numéro de dépôt: 97402477.0
(22) Date de dépôt: 20.10.1997
(51) Int. Cl.: G01N 3/60, G01N 3/08

(54) **Machine d'essai mécanique d'une éprouvette sous un flux de chaleur élevé**

(30) Priorité: 22.10.1996 FR 9612811
(71) Demandeur: COMMISSARIAT A L'ENERGIE ATOMIQUE, 75015 Paris Cédex 15 (FR)
(72) Inventeur: Maquin, Jean-Marie, 33114 Le Barp (FR); Castaldi, Marc, 33260 La Teste (FR); Fort, Christian, 33610 Canejan (FR)
(74) Mandataire: Ilgart, Jean-Christophe

(57) **Abrégé**

Cette machine se compose essentiellement d'un fourreau (9) pour loger une éprouvette (E), de lampes (59) de chauffage dont les rayonnements convergent vers la face avant de l'éprouvette (E), d'un obturateur (2) refermable en cas de besoin et notamment dans une phase de préchauffage des lampes, et d'un dispositif de compression (5) pressant sur la face arrière de l'éprouvette (E) par l'intermédiaire d'un piston (25) . Ce dispositif permet d'imposer des sollicitations uniformes et éventuellement dynamiques définies avec précision sur l'éprouvette (E), et des flux thermiques également bien définis. On peut ainsi simuler assez bien les conditions de rentrée des aéronefs dans l'atmosphère.

## Description

L'invention se présente sous la forme d'une machine d'essai mécanique d'une éprouvette sous un flux de chaleur élevé.

Elle a été conçue en particulier pour simuler les conditions de rentrée dans l'atmosphère subies par les astronefs ou les aéronefs pendant leur retour au sol : des sollicitations mécaniques relativement importantes de caractère dynamique se conjoignent à des échauffements élevés qui proviennent de flux thermiques principalement originaires de certaines portions de l'engin. Les simulations entreprises pour faire l'essai des matériaux de construction de l'engin doivent donc reproduire ces caractéristiques, ce qui soulève les problèmes principaux qui suivent :
- la chaleur ne doit toucher qu'une face de l'éprouvette, qui correspond alors à la surface de l'enveloppe de l'engin que l'atmosphère frotte ;
- l'échauffement souvent considérable subi par l'éprouvette ne doit pas être transmis en excès à la machine d'essai, ce qui pourrait la perturber ou la détruire ;
- bien que des déformations ou des déplacements importants de l'éprouvette soient prévisibles, soit à cause de dilatation thermique de l'éprouvette ou des pièces de la machine qui l'environent, soit au cours d'un début de destruction pendant l'essai, on désire rester maître de la force appliquée sur l'éprouvette ;
- on peut vouloir simuler des flux thermiques stables, alors que les sources de chauffage ont souvent une grande inertie, leur plein régime n'étant atteint que sensiblement après leur mise en route ;
- enfin, il est assez difficile d'obtenir des mesures convenables dans ces conditions difficiles.

L'invention concerne donc une machine d'essai qui résout ces problèmes. Sous sa forme la plus générale, elle comprend : un support d'éprouvette à fourreau dans lequel l'éprouvette est logée, le fourreau étant ouvert aux deux extrémités avant et arrière, découvrant les faces avant et arrière de l'éprouvette ; un actionneur pesant sur la face arrière de l'éprouvette ; une butée retenant l'éprouvette ; au moins une lampe dirigée vers la face avant de l'éprouvette ; un obturateur escamotable entre l'éprouvette et la lampe ; et des moyens de mesure.

Une bonne maîtrise de la force appliquée est obtenue si l'actionneur est composé d'un organe de poussée, d'un piston touchant la face arrière de l'éprouvette et d'un ressort comprimé entre l'organe de poussée et le piston.

La transmission de chaleur à la machine est atténuée si la butée est circulaire, solidaire du fourreau et retient l'éprouvette par l'intermédiaire d'une bague isolante reposant sur la face avant de l'éprouvette.

L'obturateur est l'agent par lequel le rayonnement des lampes n'est imposé à l'éprouvette qu'après qu'un régime de fonctionnement stable a été atteint. Une bonne construction de l'obturateur est composée de deux volets mobiles dans des sens opposés et munis chacun d'échancrures de collimation de chacune des lampes à un côté, les échancrures de collimation pour chaque lampe étant sensiblement jointives pendant une position d'ouverture de l'obturateur.

D'autres caractéristiques de l'invention, qui permettent notamment d'obtenir de bonnes mesures et de simuler un flux thermique uniforme originaire de directions embrassant un angle assez large, vont maintenant être décrite en plus de celles-là à l'aide des figures suivantes, qui illustrent une réalisation de l'invention :
- les figures 1 et 2 sont des vues générales de l'invention, respectivement de côté et de dessus ;
- la figure 3 représente le dispositif mécanique de soutien et de chargement de l'éprouvette ;
- la figure 4 est un détail de la figure 3 représentant le mode de rétention de l'éprouvette par une butée ;
- la figure 5 représente l'obturateur en vue de face ;
- la figure 6 est une coupe de l'obturateur expliquant comment ses ouvertures sont agencées.

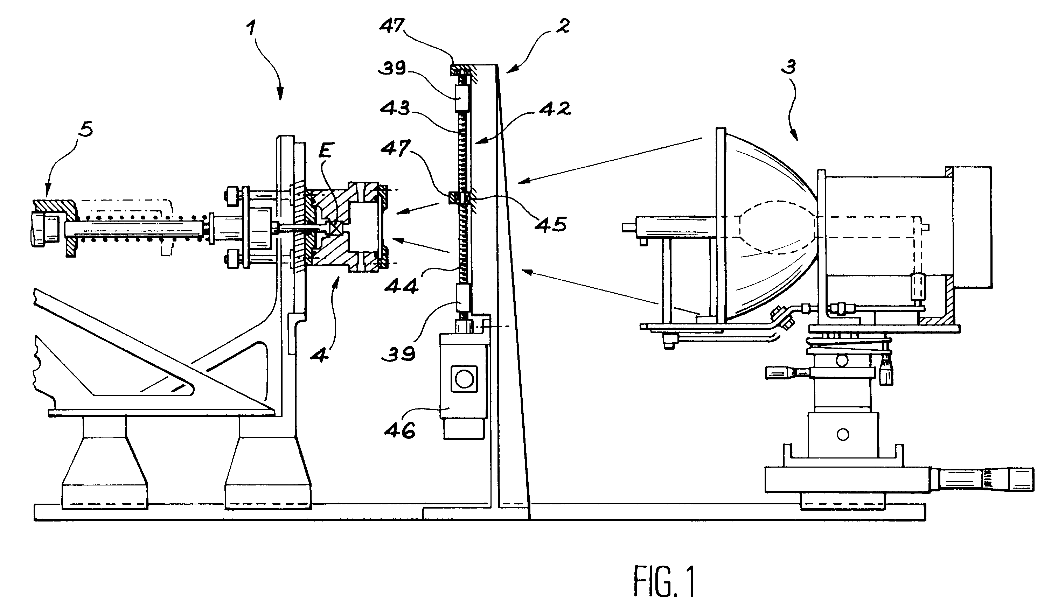

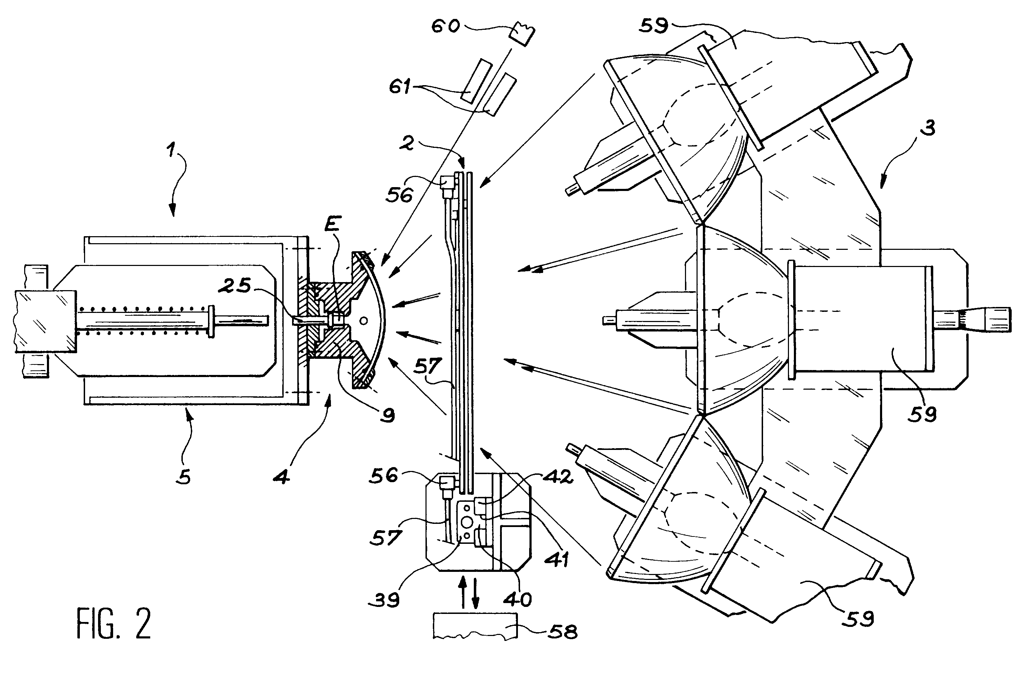

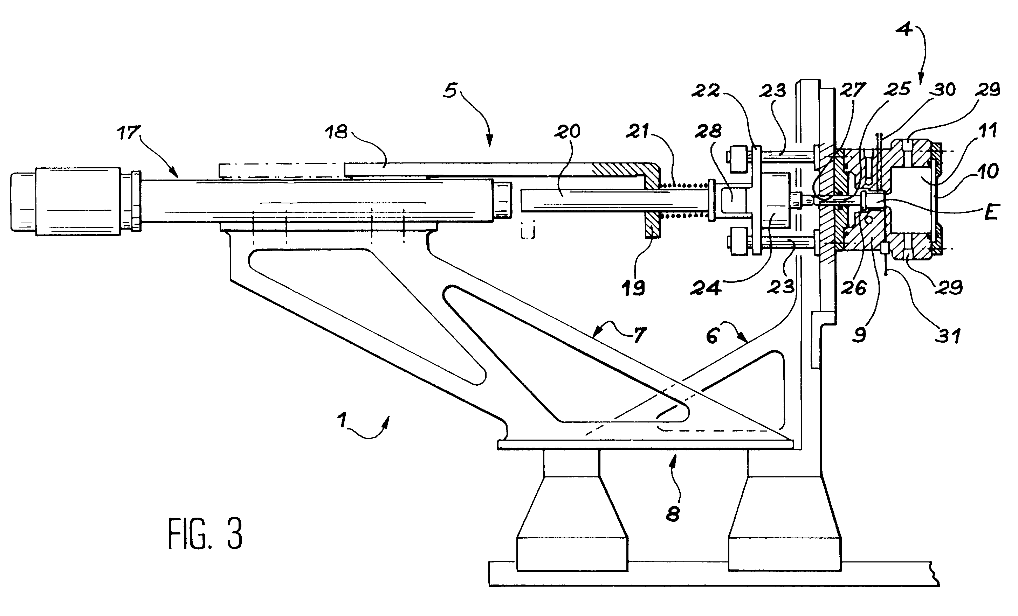

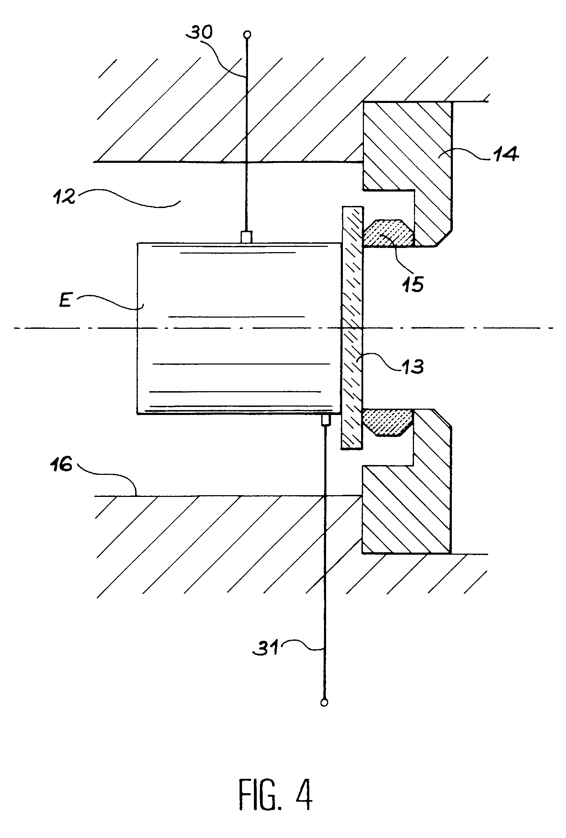

En se reportant d'abord aux figures 1 et 2, on distingue trois ensembles principaux : le dispositif mécanique 1, l'obturateur 2 et les moyens de chauffage 3 ; ils seront décrits successivement. Si on considère donc aussi les figures 3 et 4, le dispositif mécanique 1 se compose d'un dispositif de logement 4 de l'éprouvette et d'un dispositif de compression 5 tous deux portés par des nervures respectives 6 et 7 d'un bâti 8. Le dispositif de logement 4 est formé par un fourreau 9 clos à l'avant par une fenêtre 10 de quartz derrière laquelle on trouve une chambre 11. Le fond de la chambre 11 se prolonge en un logement 12 plus étroit prévu pour l'éprouvette (elle porte la référence E), qui se trouve derrière un disque 13 fermant le logement 12 et qui est posé sur une plaque d'appui circulaire 14 fixée au fond de la chambre 11 par l'entremise d'une bague 15.

Le rayonnement émis vers le fourreau 9 traverse donc la fenêtre 10 et converge sur le disque 13, qui est en carbone tissé dans les trois dimensions, ce qui lui permet d'être peu sensible aux déformations d'origine thermique et en général aux effets de la chaleur tout en la transmettant uniformément à la face avant de l'éprouvette E. La bague 15 est en zircone et empêche une conduction de chaleur excessive à la plaque d'appui 14 et au fourreau 9. On remarque que le logement 12 est plus large que l'éprouvette E, qui ne le touche donc pas par ses parois latérales, et ne lui communique pas sa chaleur par conduction ; la paroi latérale 16 du logement 12 est d'ailleurs polie et réflectrice pour limiter aussi la chaleur reçue par rayonnement.

Le dispositif de compression 5 comprend un actionneur 17 ici constitué par une table motorisée 18 mobile en translation. La table porte un rebord 19 dont la surface est dirigée vers le fourreau 9 et qui est percé pour permettre à un cylindre 20 d'y coulisser. Un ressort 21 est enfilé autour du cylindre 20 et repoussé par le rebord 19 ; son autre extrémité est retenue par un plateau mobile 22 coulissant sur des colonnes de guidage 23 fixées comme le fourreau 9 à la nervure 6 et qui appartiennent donc au dispositif de logement 4 de l'éprouvette E.

La jonction du dispositif de compression 5 au dispositif de logement 4 est complétée par un capteur de pression 24 qui s'étend du côté du plateau mobile 22 opposé au ressort 21 et se prolonge par un piston 25 dont la tête 26 pénètre dans le logement 12 et pèse sur la face arrière de l'éprouvette E. Le piston 25 traverse un perçage 27 de la nervure 6, par lequel il est guidé.

La translation de la table 18, commandée par le moteur de l'actionneur 17, permet donc de comprimer le ressort 21 et l'éprouvette E par l'intermédiaire du plateau mobile 22, du capteur de pression 24 et du piston 25. La souplesse du ressort 21 permet d'imposer la contrainte de compression voulue. Le contact entre le capteur de pression 24 et le piston 25 se fait par une surface presque ponctuelle qui permet au piston 25 de s'orienter légèrement pour que sa tête 26 pèse uniformément sur toute la face arrière de l'éprouvette E. Enfin, on remarque un capteur de déplacement 28 placé sur le plateau mobile 22 et qui peut mesurer son déplacement le long des colonnes de guidage 23.

On revient au dispositif de logement 4 pour mentionner encore des perçages 29, menant à des conduits extérieurs non représentés, et qui permettent d'insuffler une atmosphère de composition souhaitée dans la chambre 11, de l'argon par exemple, à travers le fourreau 9 ; et des thermocouples 30 et 31 qui peuvent être établis eux aussi à travers le fourreau 9 pour s'étendre jusque dans l'éprouvette E elle-même si on désire mesurer directement sa température.

La description de l'obturateur 2 sera maintenant entreprise au moyen des figures 1, 2, 5 puis 6.

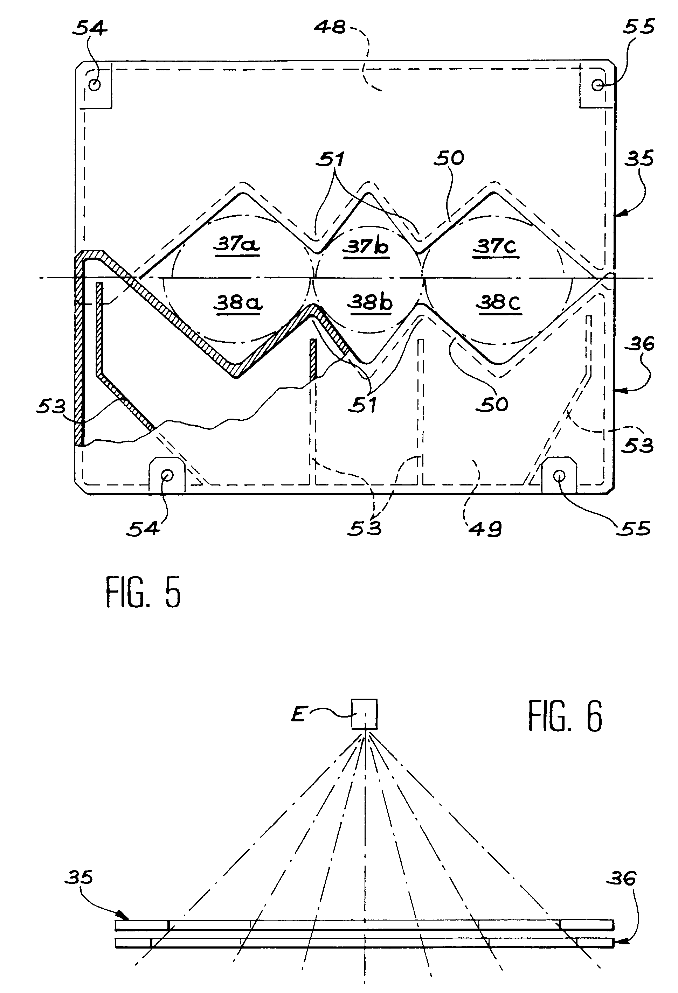

Il se compose de deux volets coulissants 35 et 36 pourvus chacun, sur un de leurs côtés, de trois échancrures semi-elliptiques 37a, 37b, 37c et 38a, 38b et 38c destinées à assurer la collimation des rayonnements des trois lampes qui servent au chauffage de l'éprouvette E. A l'état de la figure 5, les volets 35 et 36 sont à des hauteurs différentes et ne se recouvrent que sur une hauteur négligeable, et les échancrures 37 et 38 viennent sensiblement en prolongement par paires pour former trois ouvertures associées aux trois lampes. Cependant, les volets 35 et 36 sont accrochés à des supports 39 munis d'un doigt 40 coulissant dans une rainure 41 d'un profilé de guidage 42 vertical. De plus, les supports 39 sont taraudés et deux vis d'Archimède 43 et 44 en prolongement s'étendent respectivement à travers eux. Elles sont rendues solidaires par un joint 45 mitoyen et ainsi commandées toutes deux par un moteur 46 ; elles s'étendent parallèlement au profilé de guidage rainuré 42, par lequel elles sont soutenues par des paliers 47.

Un des supports 39 porte donc le volet 35 supérieur et l'autre le volet 36 inférieur ; comme les vis d'Archimède 43 et 44 sont filetées dans des sens opposés, une rotation identique infligée à chacune d'entre elles par le moteur 46 déplace les volets 35 et 36 d'une position dans laquelle ils se recouvrent et interceptent tout le rayonnement des lampes à la position d'ouverture de la figure 5.

Cette figure montre aussi que les volets 35 et 36 sont creux et contiennent des chambres 48 et 49 de refroidissement. Ces chambres s'étendent sur la plus grande partie de la surface des volets 35 et 36 et se terminent par une cloison en ligne brisée 50 du côté des échancrures 37 ou 38, qu'elle effleure. Cette disposition permet de faire couler du liquide réfrigérant contre les échancrures 37 et 38, qui avoisinent les parties les plus chauffées des volets 35 et 36. En particulier, les cloisons en ligne brisée 50 dessinent deux poches 51 qui permettent aux chambres 48 et 49 de s'étendre chacune entre les échancrures 37a et 37b, et 37b et 37c (ou entre 38a et 38b, et 38b et 38c).

La circulation du réfrigérant est favorisée pour le volet 35 supérieur, car la gravité lui fait baigner la cloison en ligne brisée 50, ce qui assure un bon refroidissement ; la situation est un peu moins favorable pour le volet 36 inférieur, dont la cloison en ligne brisée 50 est en haut, ce qui impose de diviser le volume de sa chambre 49 par des chicanes 53 qui s'élèvent du bas de la chambre 49 jusqu'à proximité de la cloison en ligne brisée 50, si bien que le réfrigérant est contraint de baigner aussi cette cloison pour contourner les chicanes 53.

Chacune des chambres 48 et 49 est alimentée par un orifice 54 et drainée par un autre orifice 55. Les orifices 54 et 55 sont reliés par des raccords 56 à des conduits de liquide 57 qui aboutissent à un circuit de réfrigérant 58 qui n'est qu'esquissé.

On aborde maintenant la figure 6. Les échancrures 37 et 38 doivent permettre d'irradier l'échantillon E en simulant aussi bien que possible le flux thermique qui lui parviendrait en réalité. Si elles ne sont pas jointives par paires, c'est que les volets 35 et 36 ne peuvent être situés dans un même plan et que le volet 35 supérieur est aussi un volet arrière (dirigé vers l'éprouvette E) . Si on veut collimater le rayonnement des lampes suivant un cône dont le sommet est placé sur l'éprouvette E ou le disque 13, les échancrures 37 et 38 doivent avoir des contours alignés sur ce cône, ce qui implique que les bords des échancrures 37 du volet 35 arrière, plus proche de l'éprouvette E, sont plus rapprochés de l'axe du cône que les bords de l'échancrure du volet 36 avant ou dirigé vers les lampes.

Le dispositif de chauffage 3 est composé (figure 2) de trois lampes 59 disposées en une rangée horizontale et dont les rayonnements convergent vers l'éprouvette E en passant par les ouvertures délimitées par les échancrures 37 et 38 de l'obturateur 2. Les lampes de forte puissance ont un temps de chauffage de plusieurs minutes, ce qui justifie l'intérêt de l'obturateur 2. Enfin, on remarque aussi une caméra 60 apte à suivre la température du disque 13 et de la face avant de l'échantillon E. Des pyromètres 61 donnent une mesure ponctuelle sur un point de mesure du disque 13. Il serait encore possible, en renonçant cependant à imposer la compression, d'examiner la face arrière de l'éprouvette E par un dispositif analogue ou une caméra infrarouge en démontant le dispositif de compression 5 et en retirant le piston 25.

Le prototype de l'invention fonctionne avec trois lampes au xénon de 7 kW de puissance chacune de manière à chauffer l'éprouvette E à 3000°C environ, et la table 18 peut délivrer des sollicitations de compression de 50 Mpa à l'éprouvette E. Des caractéristiques différentes en ce qui concerne la capacité ou l'agencement de la machine peuvent être préférées.

## Revendications

1. Machine d'essai mécanique d'une éprouvette (E) sous un flux de chaleur élevé, caractérisée par un support d'éprouvette (4) à fourreau (9) dans lequel l'éprouvette est logée, le fourreau étant ouvert aux extrémités avant et arrière, découvrant les faces avant et arrière de l'éprouvette, un actionneur (16) pesant sur la face arrière de l'éprouvette, une butée (13, 14, 15) retenant l'éprouvette, au moins une lampe (59) dirigée vers la face avant de l'éprouvette, un obturateur (2) escamotable entre l'éprouvette et la lampe et des moyens de mesure (23, 38, 30, 31, 60, 61).

2. Machine d'essai selon la revendication 1, caractérisée en ce que l'actionneur est composé d'un organe de poussée (19), d'un piston (25) touchant la face arrière de l'éprouvette et d'un ressort (21) comprimé entre l'organe de poussée et le piston.

3. Machine d'essai selon la revendication 2, caractérisée en ce que les moyens de mesure comprennent un capteur de déplacement (28) du piston (25).

4. Machine d'essai selon l'une quelconque des revendications 1 à 3, caractérisée en ce que la butée (14) est circulaire, solidaire du fourreau (9) et retient l'éprouvette (E) par l'intermédiaire d'une bague isolante (15) reposant sur la face avant de l'éprouvette.

5. Machine d'essai selon l'une quelconque des revendications 1 à 4, caractérisée en ce qu'elle comprend une rangée de lampes (59) dirigées vers un point commun de la face avant de l'éprouvette (E).

6. Machine d'essai selon l'une quelconque des revendications 1 à 5, caractérisée en ce que l'obturateur (2) est composé de deux volets mobiles (35, 36) dans des sens opposés et munis chacun d'échancrures (37, 38) de collimation de chacune des lampes à un côté, les échancrures de collimation de chaque lampe étant sensiblement jointives pour une position d'ouverture de l'obturateur (2).

7. Machine d'essai selon les revendications 5 et 6, caractérisée en ce que les échancrures de chacune des lampes ont des formes et des surfaces différentes.

8. Machine d'essai selon l'une quelconque des revendications 6 ou 7, caractérisée en ce que les échancrures de collimation de chaque lampe sont alignées sur un cône de collimation à sommet situé près de la face avant de l'éprouvette (E).

9. Machine d'essai selon l'une quelconque des revendications 1 à 8, caractérisée en ce que l'obturateur (2) est muni de canaux (57) de refroidissement.

10. Machine d'essai selon l'une quelconque des revendications 1 à 9, caractérisée en ce que les moyens de mesure comprennent des pyromètres (61) dirigés vers la face avant de l'éprouvette.
